# EUROPÄISCHE PATENTSCHRIFT

(11) **EP 1 611 368 B1**
(45) Veröffentlichungstag und Bekanntmachung des Hinweises auf die Patenterteilung: **19.11.2008**
(21) Anmeldenummer: 04724985.9
(22) Anmeldetag: 01.04.2004
(51) Int. Cl.: F16G 13/16, H02G 11/00, G01M 13/02

(54) **ÜBERWACHUNGSSYSTEM FÜR DEN BETRIEB WENIGSTENS EINER ENERGIEFÜHRUNGSKETTE**
MONITORING SYSTEM FOR THE OPERATION OF AT LEAST ONE ENERGY DRAG CHAIN
SYSTEME DE SURVEILLANCE POUR LE FONCTIONNEMENT D'AU MOINS UNE CHAINE DE GUIDAGE D'ELEMENTS DE TRANSPORT D'ENERGIE

(30) Priorität: 04.04.2003 DE 20305619 U; 07.04.2003 DE 20305678 U; 08.08.2003 DE 20312266 U
(43) Veröffentlichungstag der Anmeldung: 04.01.2006
(73) Patentinhaber: igus GmbH, 51147 Köln (DE)
(72) Erfinder: BLASE, Günter, 51429 Bergisch Gladbach (DE); HERMEY, Andreas, 53773 Hennef (DE)
(74) Vertreter: Lippert, Stachow & Partner
(86) Internationale Anmeldenummer: PCT/DE2004/000709
(87) Internationale Veröffentlichungsnummer: WO 2004/090375

(56) Entgegenhaltungen:
- EP-A- 1 521 015
- DE-A- 3 523 638
- DE-A- 10 036 014
- DE-A- 19 839 270

## Beschreibung

Die Erfindung betrifft ein Überwachungssystem für den Betrieb wenigstens einer Energieführungskette, die mehrere miteinander gelenkig verbundene Kettenglieder umfasst und zwischen zwei relativ zueinander beweglichen Anschlussstellen Schläuche, Kabel oder dergleichen führt. Des Weiteren betrifft die Erfindung eine Energieführungskette in die ein solches Überwachungssystem zumindest teilweise integriert ist.

Wird beispielsweise eine Anschlussstelle der Energieführungskette bewegt, hat dies zur Folge, dass auch die Energieführungskette oder zumindest ein Teil der Energieführungskette bewegt wird. Eine Bewegung der Kette verursacht aufgrund Reibung und Trägheit immer eine der Bewegung entgegengesetzte Kraft. Insbesondere bei langen und schweren Energieführungsketten wie zum Beispiel für Lastkräne können diese Reibkräfte und Trägheitskräfte erhebliche Ausmaße annehmen.

Aus dem Dokument DE 198 39 270 A1 ist eine Energieführungskette bekannt, wobei die Aufgabe gestellt wird, den Kraftaufwand und den Verschleiß der Kettenglieder zu minimieren.

Aus dem Dokument DE 100 36 014 A1 ist bekannt ein Überwachungssystem mit einer Messeinrichtung, zur Messung einer auf ein Kettenglied wirkenden Kraft und mit einer Auswerteeinheit, die Messwerte der Messeinrichtung einliest, wobei die Auswerteeinheit wenigstens einen Messwert der Messeinrichtung mit einem Sollwert vergleicht und ein Signal erzeugt, wenn der Messwert einen vorgegebenen Wert überschreitet.

Durch Auslegung der Energieführungskette und der Führung für die Energieführungskette, wie zum Beispiel eine Führungsrinne mit Gleitschienen, durch die eine Energieführungskette ihrerseits geführt wird, lassen sich die Reibkräfte beeinflussen. Jedoch kann der Verschleiß von Energieführungskette, Führungsrinne oder Gleitschiene bei der Bewegung der Energieführungskette zu unerwartet hohen Reibkräften führen. Auch ist es möglich, dass die Energieführungskette der Bewegung einer Anschlussstelle aufgrund eines Defekts oder eines Hindernisses beispielsweise in der Führungsrinne nicht wie vorgesehen folgen kann, so dass in der Energieführungskette hohe Kräfte entstehen. Zu hohe Kräfte, Temperaturen oder über einen Sollwert hinausgehende Werte anderer maßgeblicher physikalischer Größen, wie sie auch immer beim Betrieb einer Energieführungskette verursacht werden, können einen ordnungsgemäßen Betrieb gefährden oder unmöglich machen.

Der Erfindung liegt daher die Aufgabe zugrunde, einen sicheren Betrieb der Energieführungskette zu ermöglichen.

Die Aufgabe wird erfindungsgemäß durch eine Energieführungskette gemäß Anspruch 1 sowie durch ein Überwachungssystem für den Betrieb wenigstens einer Energieführungskette mit der Merkmalskombination des Anspruchs 12 gelöst. Das Überwachungssystem umfasst dabei eine erste Messeinrichtung, zur Messung einer auf ein Kettenglied wirkenden Kraft und/oder einer anderen physikalischen Größe an einem ersten Kettenglied, und wenigstens eine zweite Messeinrichtung, zur Messung einer auf ein anderes Kettenglied wirkenden Kraft und/oder einer anderen physikalischen Größe an diesem anderen Kettenglied, und eine Auswerteeinheit (13), die Messwerte der Messeinrichtungen (9b, 9c, 9d, 9e) einliest, wobei der Auswerteeinheit (13) ein Wert zuführbar ist, durch den die Position der beweglichen Anschlussstelle der Energieführungskette bestimmt bzw. berechenbar ist, die Auswerteeinheit wenigstens einen Messwert einer Messeinrichtung mit einem jeweiligen Sollwert vergleicht, wobei die jeweiligen Sollwerte und/oder die jeweiligen Toleranzbereiche von der Position wenigstens einer beweglichen Anschlussstelle (2, 3) abhängen, und ein Signal erzeugt, wenn der Messwert außerhalb eines Toleranzbereiches des jeweiligen Sollwerts liegt. Dabei kann einer intakten Energieführungskette und einem ordnungsgemäßen Betrieb einer Energieführungskette ein bestimmter Sollwert für die Kraft, Temperatur oder eine andere maßgebliche physikalische Größe zugeordnet werden. Liegt im Betrieb der Energieführungskette der gemessene Wert innerhalb des Toleranzbereiches des entsprechenden Sollwertes, kann davon ausgegangen werden, dass die Energieführungskette intakt ist und der Betrieb ordnungsgemäß verläuft. Befindet sich hingegen der gemessene Wert außerhalb des Toleranzbereiches, muss von einer Störung oder von einem zu großen Verschleiß der Energieführungskette ausgegangen werden. In diesem Fall wird ein Signal erzeugt, das einen nicht ordnungsgemäßen Betrieb bzw. zu großen Verschleiß der Energieführungskette anzeigt.

Das erzeugte Signal kann zu einer Einrichtung übertragen werden, die aufgrund des ursprünglichen oder gegebenenfalls verarbeiteten Signals den Betriebszustand der Energieführungskette ändert. Somit führt eine zu hohe Kraft oder auch eine zu niedrige Kraft automatisch zu einer Änderung des Betriebszustands der Energieführungskette. Beispielsweise kann der Betriebszustand der Energieführungskette durch die Verlangsamung der Bewegung einer Anschlussstelle geändert werden. Auch kann das zu der Einrichtung übertragene Signal zu einem Nothalt führen, bei dem die Bewegung der Anschlussstelle bzw. die Relativbewegung der Anschlussstellen gestoppt wird.

Vorzugsweise stellt der vorbestimmte Sollwert einen vorbestimmten Maximalwert für die gemessene Größe, z. B. die Kraft, dar. In diesem Fall würde sich der Toleranzbereich von einem Kraftwert gleich null bis zu dem Sollwert erstrecken. Somit würde ein Signal erzeugt werden, wenn die gemessene Kraft den vorbestimmten Maximalwert überschreitet.

Der vorbestimmte Sollwert und/oder vorbestimmte Toleranzbereich hängt von der Position wenigstens einer beweglichen Anschlussstelle ab. Durch die Position der beweglichen Anschlussstelle ist bei ordnungsgemäßen Betrieb die Lage der mit der Anschlussstelle verbundenen Energieführungskette eindeutig festgelegt. Damit kann jeder Position der beweglichen Anschlussstelle eine bestimmte Lage der Energieführungskette zugeordnet werden, der wiederum aufgrund der vorgegebenen Führung der Energieführungskette eine bestimmte Reibungsstrecke mit zum Teil unterschiedlichen Reibungsbeiwerten zugeordnet werden kann. Dies bedeutet, dass auch bei ordnungsgemäßem Betrieb der Energieführungskette je nach Lage oder Position der beweglichen Anschlussstelle mit unterschiedlichen Reibkräften zu rechnen ist, die der Bewegung der Energieführungskette entgegenwirken.

Der Auswerteeinheit wird neben dem gemessenen Kraftwert ein Wert zugeführt, durch den die Position der beweglichen Anschlussstelle bestimmt bzw. berechnet werden kann. Der vorbestimmte Sollwert und/oder der vorbestimmte Toleranzwert hängt von der Position der beweglichen Anschlussstelle ab. In einem einfachen Fall wird der zurückgelegte Weg der Anschlussstelle von einem Bezugspunkt gemessen. Es ist aber auch möglich die Position durch andere Größen wie Zeit, Geschwindigkeit und Beschleunigung zu ermitteln.

Auch die absolute oder relative Breite und/oder die auf den Sollwert bezogene Lage des vorbestimmten Toleranzbereiches kann von der Position der Anschlussstelle abhängen. Dadurch ist beispielsweise die Möglichkeit gegeben, bei vergleichsweise hohen Sollwerten einen entsprechend breiten Toleranzbereich vorzugeben.

Durch ein Überwachungssystem kann die auf die Kette wirkende Kraft gemessen werden. Übersteigt dabei der Messwert einen vorbestimmten Grenzwert, wird üblicherweise die Bewegung der beweglichen Anschlussstelle gestoppt, sodass ein weiterer Anstieg der Kraft und damit eine mögliche Beschädigung der Energieführungskette vermieden wird. Dabei wird in der Regel an der beweglichen Anschlussstelle die Kraft in Längsrichtung der Energieführungskette gemessen. Diese resultierende Kraft am Ende der Energieführungskette entspricht der Summe der auf die einzelnen Kettenglieder wirkenden Einzelkräfte. Erzeugt daher ein Kettenglied aufgrund Beschädigung oder verstärkten Verschleißes eine erhöhte Reibung, wirkt sich dies auch auf die gemessene Kraft am Ende der Energieführungskette aus. Somit kann anhand der gemessenen Kraft am Ende der Energieführungskette sicher festgestellt werden, ob an einem beliebigen Kettenglied eine erhöhte Reibung durch Beschädigung oder Verschleiß vorliegt.

Um darüber hinaus auch feststellen zu können, welches Kettenglied für die erhöhte Kraft am Kettenende verantwortlich ist, kann ein Überwachungssystem vorgesehen sein mit einer ersten Messeinrichtung, die eine auf ein Kettenglied wirkende Kraft und/oder eine andere physikalische Größe an diesem Kettenglied misst, und mit wenigstens einer zweiten Messeinrichtung, die eine auf ein anderes Kettenglied wirkende Kraft und/oder eine andere physikalische Größe an diesem anderen Kettenglied misst, und mit einer Auswerteeinrichtung, die Messwerte der Messeinrichtungen einliest, wenigstens einen Messwert einer Messeinrichtung mit dem jeweiligen Sollwert vergleicht und ein Signal erzeugt, wenn der Messwert außerhalb des Toleranzbereiches des jeweiligen Sollwertes liegt.

Beispielsweise kann die erste Messeinrichtung die auf ein Kettenendglied wirkende Kraft messen, während weitere Messeinrichtungen die Kräfte an unterschiedlichen Kettengliedern der Energieführungskette, beispielsweise im mittigen Bereich, messen. Aufgrund der Messwerte von den einzelnen Kettengliedern und durch Vergleich der einzelnen Messwerte untereinander kann festgestellt werden, in welchem Teilbereich der Kette sich ein Kettenglied befindet, das durch die Bewegung der Energieführungskette eine besonders hohe Reibung verursacht. Dadurch lässt sich ein möglicherweise beschädigtes Kettenglied schneller finden, da man aufgrund der Analyse der einzelnen Messwerte den Ort der Beschädigung schneller eingrenzen kann.

Vorzugsweise liefert jede Messeinrichtung einen Messwert, der mit dem jeweiligen Sollwert verglichen wird. Das Überwachungssystem kann dabei so konfiguriert werden, dass ein Signal erzeugt wird, wenn lediglich ein Messwert außerhalb seines Toleranzbereiches des entsprechenden Sollwertes liegt, während die Messwerte der anderen Messeinrichtungen innerhalb der entsprechenden Toleranzbereiche liegen.

Der jeweilige Sollwert und/oder der jeweilige Toleranzbereich kann von der Bewegungsrichtung wenigstens einer beweglichen Anschlussstelle abhängen. Durch die Abhängigkeit des Sollwertes von der Bewegungsrichtung wird sichergestellt, dass sich der Sollwert auch an der Wirkrichtung der der Bewegungsrichtung der Energieführungskette entgegenwirkenden Reib- beziehungsweise Trägheitskräften orientiert. Hierbei ist es notwendig, dass die Bewegungsrichtung der Anschlussstelle ermittelt wird und eine entsprechende Information der Auswerteeinheit zugeführt wird. In diesem Fall umfasst das Überwachungssystem ein Mittel zur Erfassung der Bewegungsrichtung der beweglichen Anschlussstelle.

Der jeweilige Sollwert und/oder der jeweilige Toleranzbereich kann nicht nur von der augenblicklichen Bewegungsrichtung der Anschlussstelle abhängen, sondern auch von der Bewegungsrichtung, in die sich die Anschlussstelle zuvor bewegt hat. Bewegt sich beispielsweise die Anschlussstelle in eine Richtung, wird dann gestoppt, und schließlich weiter in die gleiche Richtung bewegt, werden sich ohne jegliche Zeitverzögerung die einzelnen Kettenglieder der Energieführungskette ebenfalls in Bewegung setzen, weil die einzelnen Kettenglieder in der entsprechenden Bewegungsrichtung ohne Spiel in Längsrichtung der Energieführungskette aneinander anliegen. Wechselt hingegen nach einem Stopp der beweglichen Anschlussstelle die Bewegungsrichtung, tritt eine Bewegung der einzelnen Kettenglieder aufgrund des gegebenen Spiels zwischen den einzelnen Kettengliedern mit zeitlicher Verzögerung ein. Dies bedeutet aber auch, dass auch die an den einzelnen Kettengliedern gemessenen Kräfte erst mit zeitlicher Verzögerung gemessen werden. Diese zeitliche Verzögerungen können ebenfalls bei der Festlegung der Sollwerte und/oder Toleranzbereiche berücksichtigt werden.

Vorzugsweise weist die Auswerteeinheit einen Speicher auf, der die erfassten Messwerte speichert. Somit besteht die Möglichkeit, anhand gespeicherter Messwerte einen allmählichen Verschleiß der Energieführungskette zu erkennen. Beispielsweise können bei der Inbetriebnahme der Energieführungskette die gemessenen Werte als Grundlage für die Festlegung der Sollwerte und/oder der Toleranzbereiche verwendet werden. Dabei werden in einem Probelauf die Messwerte erfasst und gespeichert. Diese dienen dann für den Normalbetrieb als Sollwerte.

Es ist auch möglich, dass nicht nur bei der Inbetriebnahme, sondern auch in gewissen Prüfabständen die dann derzeitigen Messwerte als Grundlage für neu einzustellende Sollwerte und/oder Toleranzbereiche verwendet werden. So kann eine zu sensible Abschaltung vermieden werden, wenn aufgrund moderaten Verschleißes der Energieführungskette die Reibkräfte zwar ansteigen, jedoch noch in einem tolerierbaren Bereich liegen.

In einem bevorzugten Ausführungsbeispiel wird der Messwert der ersten Messeinrichtung als Grundlage für die Festlegung des Sollwerts und/oder des Toleranzbereiches des Messwerts der zweiten Messeinrichtung verwendet. Misst beispielsweise eine Messeinrichtung die Kraft, die an einem Kettenglied in der Mitte der Energieführungskette angreift, und eine Messeinrichtung die Kraft, die an der beweglichen Anschlussstelle auf das entsprechende Kettenendglied wirkt, so könnte die Hälfte des Messwerts am Kettenendglied als Sollwert für den Messwert des in der Mitte befindlichen Kettengliedes dienen.

In einer bevorzugten Weiterbildung der Erfindung kann das Überwachungssystem wenigstens einen Kraftaufnehmer zur Erfassung einer in einer Sollbewegungsrichtung, insbesondere Längsrichtung, der Energieführungskette auf diese oder einen Teilbereich derselben wirkenden Kraft umfassen. Der vorbestimmte Sollwert kann sich zumindest im Wesentlichen linear oder stetig gekrümmt mit einer Positionsänderung der Anschlussstelle oder eines Kettenteilbereichs, insbesondere eines Endbefestigungsteils, ändern. Mit der Positionsänderung der Anschlussstelle kann die Reibstrecke der Energieführungskette ansteigen, und mit dem Anstieg der Reibstrecke wächst dann die auf die Energieführungskette wirkende Summe der Reibkräfte proportional bzw. entsprechend einer stetigen nicht linearen Funktion an. Somit orientiert sich auch hier der vorbestimmte Sollwert an der rechnerischen bzw. zu erwartenden Summe der durch die Bewegung der Energieführungskette verursachten Reibkräfte.

In einem bevorzugten Ausführungsbeispiel ist der Kraftaufnehmer mit einem Ende mit einem Endbefestigungsteil oder einem Kettenglied eines beweglichen Endbereichs der Energieführungskette verbunden, wobei diese Verbindung die Kräfte von dem Endbefestigungsteil bzw. von dem Kettenglied auf den Kraftaufnehmer überträgt. Somit misst der Kraftaufnehmer die auf das Endbefestigungsteil oder den Kettenendbereich der Energieführungskette wirkende Kraft. Somit werden aufgrund des Actio-Reactio-Prinzips die Summe aller Reibkräfte und Trägheitskräfte durch den Kraftaufnehmer als Resultierende erfasst, die bei der Bewegung der Energieführungskette auf diese wirken.

Der Kraftaufnehmer kann mit einem zweiten Ende mit einem Mitnehmer eines beweglichen Verbrauchers Kräfte übertragend verbunden sein, wodurch ein Kraftfluss von dem Mitnehmer auf das Endbefestigungsteil oder auf das Kettenglied des beweglichen Endbereichs der Energieführungskette gegeben ist.

Vorzugsweise ist der Kraftaufnehmer außerhalb der Energieführungskette und in Verlängerung derselben angeordnet. Durch die Lage des Kraftaufnehmers außerhalb der Energieführungskette wird die Führung der in der Energieführungskette befindlichen Schläuche, Kabel oder dergleichen nicht beeinträchtigt. Die Lage des Kraftaufnehmers in Verlängerung der Energieführungskette stellt sicher, die in Längsrichtung der Energieführungskette wirkenden Kräfte momentenfrei am Kraftaufnehmer vorliegen.

Vorzugsweise sind das Endbefestigungsteil oder der bewegliche Endbereich der Energieführungskette und der Mitnehmer über eine Linearführung miteinander verbunden, die eine Linearbewegung in Kettenlängsrichtung ermöglicht. Dadurch ergibt sich für den Kraftaufnehmer, der hinsichtlich des Kraftflusses zwischen dem Endbefestigungsteil der Energieführungskette und dem Mitnehmer geschaltet ist, in Kettenlängsrichtung für den Betrieb einer Kraftmessdose notwendiges Spiel.

Alternativ kann ein für den Kraftaufnehmer vorzusehendes Spiel auch dadurch erreicht werden, dass das Endbefestigungsteil oder der Endbereich der Energieführungskette mit dem Mitnehmer durch eine den Endbefestigungsteil oder den Endbereich und den Mitnehmer beabstandende Hebelanordnung verbunden ist, wobei die Hebelanordnung eine begrenzte Relativbewegung von Endbefestigungsteil und Mitnehmer in Längsrichtung der Energieführungskette zulässt. Eine derartige Verbindung weist den Vorteil auf, dass ein Verkanten zwischen Endbefestigungsteil/Endbereich und Mitnehmer nicht möglich ist und dass eine Reibung zwischen den derart verbundenen Teilen klein gehalten werden kann. Dadurch misst der Kraftaufnehmer die Kraft, die der Zug- bzw. Schubkraft entspricht, die auf das Endbefestigungsteil bzw. auf den Endbereich der Energieführungskette wirkt.

In einem bevorzugten Ausführungsbeispiel ist der Mitnehmer zumindest quer zur Kettenlängsrichtung schwimmend gelagert.

Für das erfindungsgemäße Überwachungssystem kann eine Anschlusseinrichtung zur Verbindung einer Energieführungskette mit einem beweglichen Verbraucher eingesetzt werden. Diese Anschlusseinrichtung weist einen Kraftaufnehmer mit einem ersten und zweiten Ende, ein erstes Verbindungsstück zur Verbindung des ersten Endes des Kraftaufnehmers mit einer Energieführungskette, insbesondere mit einem Endbefestigungsteil, und ein zweites Verbindungsstück zur Verbindung des zweiten Endes des Kraftaufnehmers mit einem Mitnehmer für einen beweglichen Verbraucher auf.

Vorzugsweise weist das erste Verbindungsstück einen Befestigungsbereich für den Endbefestigungsteil der Energieführungskette und einen Unterstützungsbereich zur Unterstützung wenigstens eines sich an das Endbefestigungsteil anschließenden Kettengliedes auf. Das erste Verbindungsstück kann mit Zugentlastungen für die durch die Energieführungskette geführten Leitungen, Kabel oder dergleichen versehen sein. Die Zugentlastungen verhindern, dass die Leitungen, Kabel oder dergleichen in der Energieführungskette Zug- bzw. Druckkräften ausgesetzt sind.

Die Anschlussvorrichtung weist vorzugsweise ein erstes Verbindungsstück mit einer Durchbrechung auf, durch welche eine Ankupplungseinrichtung durchtritt, die auf einer Seite der Durchbrechung mit dem Mitnehmer eines beweglichen Verbrauchers und auf der anderen Seite der Durchbrechung mit dem zweiten Verbindungsstück verbunden oder an diesem befestigt ist.

In einer bevorzugten Ausführungsform sind das Endbefestigungsteil der Energieführungskette und/oder das erste Verbindungsstück mit einer seitlichen Führungseinrichtung mit dem zweiten Verbindungsstück und/oder der Ankupplungseinrichtung verbunden.

Eine herkömmliche Energieführungskette mit mehreren miteinander gelenkig verbundenen Kettengliedern zur Führung von Schläuchen, Kabeln oder dergleichen zwischen zwei relativ zueinander beweglichen Anschlussstellen kann für das erfindungsgemäße Überwachungssystem eingesetzt werden, wenn die Energieführungskette wenigstens zwei Kettenglieder mit jeweils einer Messeinrichtung umfasst, die eine auf das jeweilige Kettenglied wirkende Kraft und/oder eine andere physikalische Größe an dem Kettenglied misst.

Bei einer bevorzugten Weiterbildung ist vorgesehen, dass wenigstens zwei Kettenglieder jeweils eine Messeinrichtung umfassen, eine auf das jeweilige Kettenglied wirkende Kraft und/oder eine andere physikalische Größe an dem Kettenglied misst.

Beispielsweise kann sich ein Kettenglied mit einer Messeinrichtung an der beweglichen Anschlussstelle und ein Kettenglied mit einer anderen Messeinrichtung in der Mitte der Energieführungskette befinden. Bei dieser Anordnung kann zum einen die auf die gesamte Energieführungskette wirkende Kraft und zum anderen die Kraft erfasst werden, die auf das entsprechende Kettenglied in der Mitte der Energieführungskette wirkt. Diese gemessenen Kraftwerte ermöglichen eine differenzierte Aussage über die beiden Teilbereiche der Kette.

Vorteilhafterweise umfasst bei der erfindungsgemäßen Energieführungskette eine Messeinrichtung ein Dehnungsmessstreifen. Dieser kann in einem Bauteil des Kettengliedes eingegossen sein oder in einer Aussparung im Kettenglied eingesetzt sein.

Ein nicht beanspruchter Gegenstand betrifft auch ein Kettenglied für eine Energieführungskette, die zwischen zwei relativ zueinander beweglichen Anschlussstellen Schläuche, Kabel und/oder dergleichen führt, wobei das Kettenglied gelenkig mit einem anderen Kettenglied verbunden werden kann. Das Kettenglied zeichnet sich dadurch aus, dass es eine Messeinrichtung umfasst, mit der eine auf das Kettenglied wirkende Kraft und/oder eine andere physikalische Größe an dem Kettenglied gemessen werden kann.

In einem anderen Ausführungsbeispiel des Kettenglieds umfasst die Messeinrichtung wenigstens einen Dehnungsmessstreifen. Mit dem Dehnungsmessstreifen kann die Dehnung in dem Kettenglied gemessen werden, die durch Krafteinwirkung auf das Kettenglied verursacht wird. Daraus kann unter Berücksichtigung des Elastizitätsmoduls und der Geometrie des Kettenglieds die auf das Kettenglied wirkende Kraft bestimmt werden. Die Messeinrichtung kann auch mehrere Dehnungsmessstreifen umfassen, die an verschiedenen Stellen am Kettenglied angebracht sein können.

Ein Vorteil von Dehnungsmessstreifen besteht darin, dass sie vergleichsweise wenig Platz benötigen und den für die Schläuche oder Kabel benötigten Raum nicht unnötig einschränken.

In einem weiteren Ausführungsbeispiel ist der Dehnungsmessstreifen in einer Seitenlasche des Kettenglieds angeordnet. Bei diesem Ausführungsbeispiel umfasst das Kettenglied zwei zueinander beabstandete Seitenlaschen, die über wenigstens einen Quersteg miteinander verbunden sind. Die Seitenlaschen des Kettenglieds nehmen, wenn das Kettenglied mit anderen Kettengliedern zu einer Kette zusammengesetzt wird, die in Längswirkung der Energieführungskette wirkenden Kräfte auf. Dies führt in den Seitenlaschen der Kettengliedern zu Verformungen, die von dem Dehnungsmessstreifen gemessen werden können. Zu beachten ist, dass die Dehnungsmessstreifen entsprechend der Richtung der zu messenden Kraft ausgerichtet sind.

Die Messeinrichtung kann wenigstens zum Teil in einem Bauteil des Kettenglieds eingegossen sein. Beispielsweise lässt sich so ein Dehnungsmessstreifen vor Schmutz und anderen äußeren Einwirkungen wirkungsvoll schützen, in dem es vollständig in einem Bauteil des Kettenglieds eingegossen ist.

Die Messeinrichtung kann einen Einsatz umfassen, mit dessen Hilfe die Messeinrichtung beim Gießen des Bauteils des Kettenglieds in einer gewünschten Position gehalten werden kann. Sind beispielsweise Position und Ausrichtung eines Dehnungsmessstreifen nicht eindeutig festgelegt, sind die mit dem Dehnungsmessstreifen ermittelten Werte nicht brauchbar.

Der Einsatz kann eine Steckverbindung aufweisen. In diese Steckverbindung können beispielsweise ein oder mehrere Stifte eines Werkzeuges greifen, das den Einsatz mit der Messeinrichtung in einer Gussform für das Bauteil der Messeinrichtung fixiert und ein Wegschwemmen beim Gießen verhindert.

Der Einsatz kann auch als Schmelzeinsatz ausgebildet sein. Beim Gießen des Bauteils des Kettenglieds verbindet sich das Material des Schmelzeinsatzes mit dem Gussmaterial für das Bauteil beziehungsweise geht mit dem Gussmaterial eine Verbindung ein.

Eine andere Möglichkeit, die Messeinrichtung an einem Bauteil des Kettenglieds zu befestigen, besteht darin, die Messeinrichtung in eine Aussparung einzusetzen. Durch beispielsweise Harz oder Kunststoff lässt sich die in der Aussparung befindliche Messeinrichtung abdecken. Auch kann die Aussparung mit wenigstens einer Hintergreifung ausgestattet sein, so dass eine Abdeckung in Form eines Clips möglich ist.

In einer weiteren Ausbildung kann die Messeinrichtung einen Kraftaufnehmer zur Erfassung einer Kraft in Längsrichtung der Energieführungskette aufweisen. Der Kraftaufnehmer kann dabei mit einem Endbefestigungsteil oder mit einem Endbereich der Energieführungskette verbunden sein. Vorzugsweise ist der Kraftaufnehmer an einem Ende der Energieführungskette angeordnet.

Der Kraftaufnehmer kann mit einem ersten Ende mit einem Endbefestigungsteil der Energieführungskette verbunden sein, wobei der Kraftaufnehmer mit einem zweiten Ende mit einem Mitnehmer eines beweglichen Verbrauchers verbunden werden kann.

Vorzugsweise ist der dem Kraftaufnehmer vorgelagerte Bereich mittels einer seitlichen Führung an dem dem Kraftaufnehmer nachgelagerten Bereich geführt.

Anhand der in den Figuren dargestellten Ausführungsbeispielen wird die Erfindung näher beschrieben. Dabei zeigen
- Figur 1a: eine erfindungsgemäße Energieführungskette;
- Figur 2a: in schematischer Weise ein Überwachungssystem mit einem vereinfachten mechanischen Modell für die Energieführungskette sowie ein Diagramm von Sollwerten in Abhängigkeit eines Verfahrwegs;
- Figur 3a: eine Seitenlasche eines Kettenglieds der Energieführungskette mit einem Dehnungsmessstreifen sowie einer vergrößerten Darstellung des Dehnungsmessstreifens;
- Figur 4a: die Seitenlasche der Figur 3 als Schnitt in der Draufsicht sowie eine vergrößerten Teildarstellung der Seitenlasche mit einer Aussparung;
- Figur 5a: eine vergrößerte Teildarstellung der Seitenlasche entsprechend der Figur 4 mit einer anderen Ausführungsform für die Aussparung;
- Figur 6a: eine vergrößerte Teildarstellung der Seitenlasche entsprechend der Figur 4, wobei der Dehnungsmessstreifen komplett umspritzt ist;
- Figur 7a: eine vergrößerte Teildarstellung der Seitenlasche entsprechend der Figur 4, wobei der Dehnungsmessstreifen einen Einsatz zur Fixierung umfasst; und
- Figur 8a: eine vergrößerte Teildarstellung der Seitenlasche entsprechend der Figur 4, wobei der Dehnungsmessstreifen einen Schmelzeinsatz umfasst.

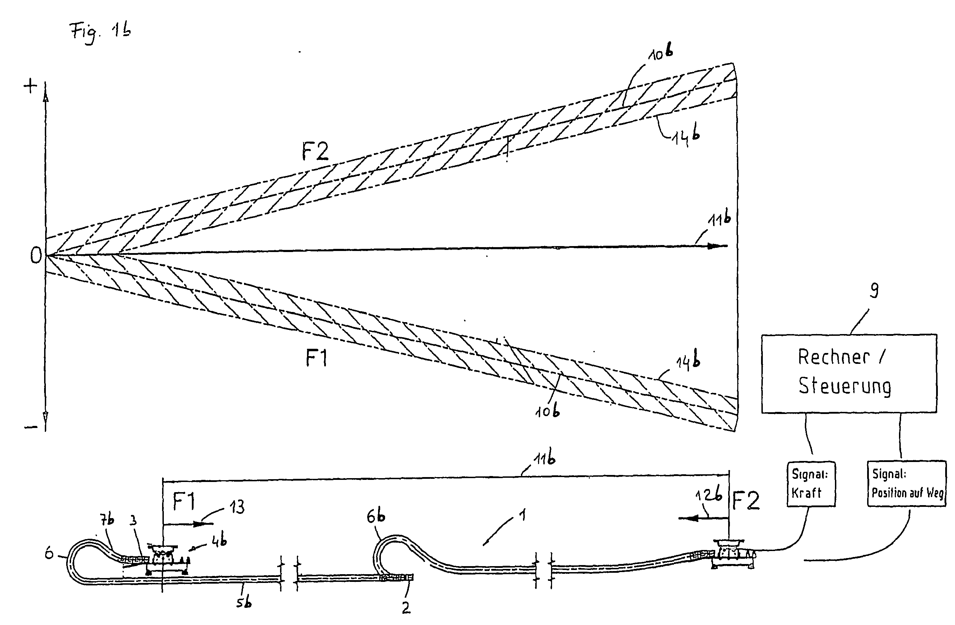

- Figur 1b: ein erfindungsgemäßes Überwachungssystem in schematischer Ansicht mit einem Diagramm für einen vorbestimmten Sollwert und einem vorbestimmten Toleranzwert;

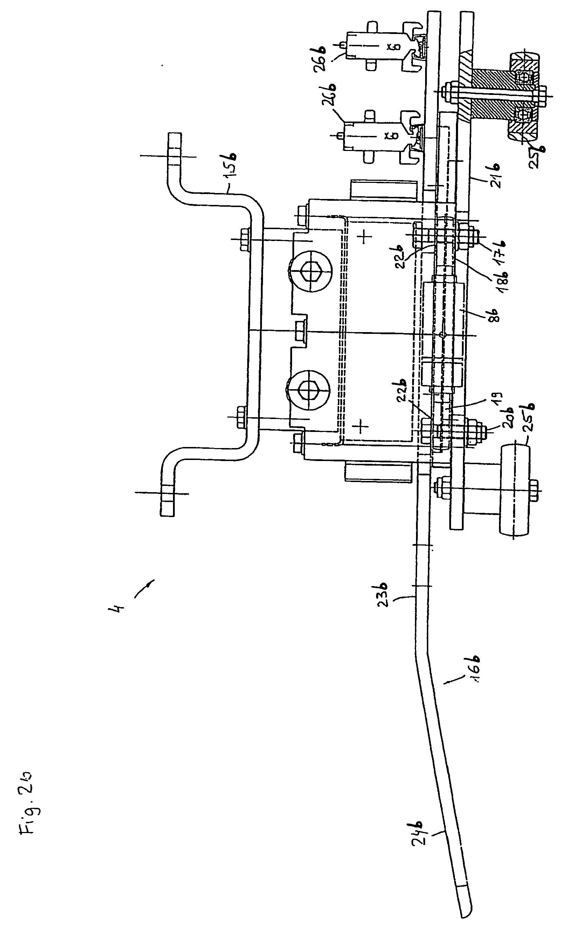

- Figur 2b: eine erste Anschlusseinrichtung zur Verbindung einer Energieführungskette mit einem beweglichen Verbraucher; und

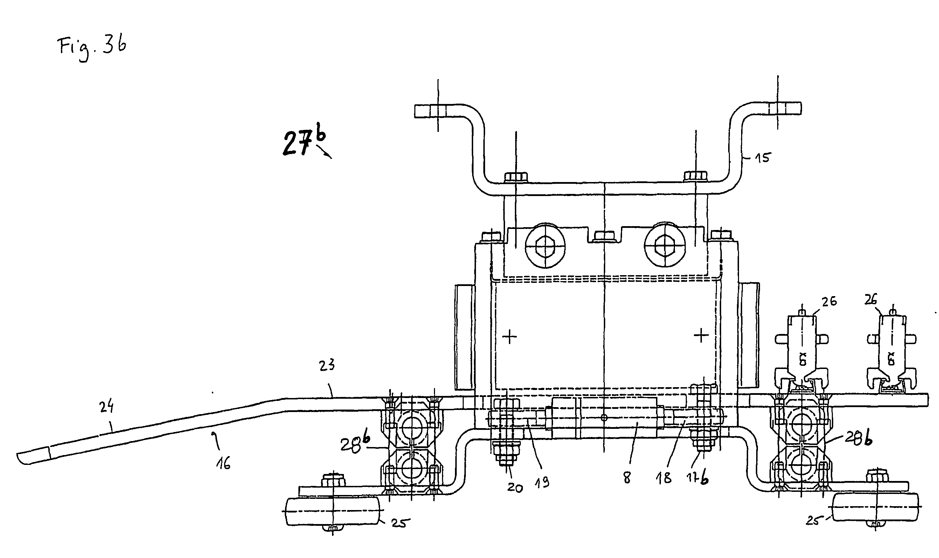

- Figur 3b: ein zweite Anschlusseinrichtung zur Verbindung einer Energieführungskette mit einem beweglichen Verbraucher.

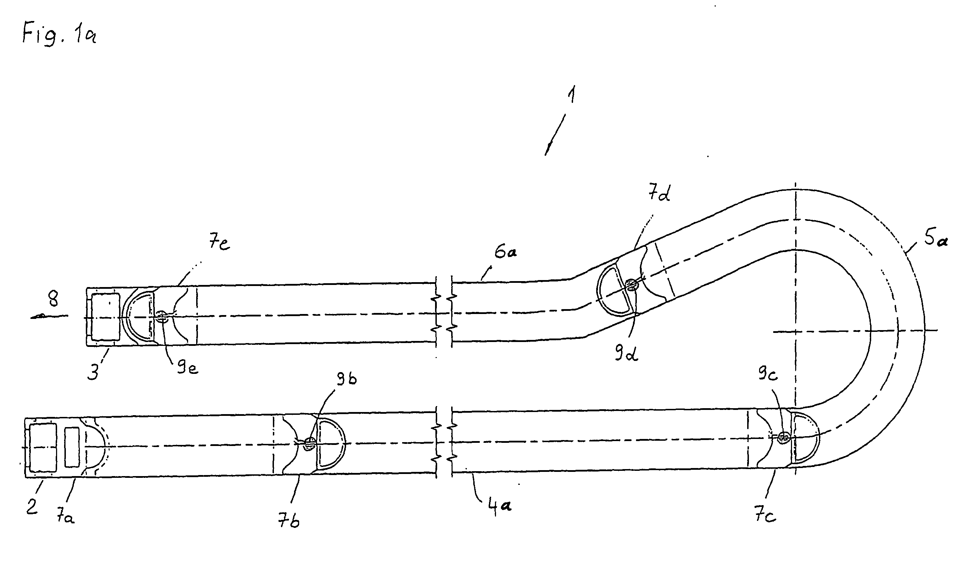

Figur 1a zeigt eine Energieführungskette 1, die eine feste Anschlussstelle 2 und eine bewegliche Anschlussstelle 3 aufweist. An der beweglichen Anschlussstelle 3 kann die Energieführungskette 1 mit einem beweglichen Verbraucher (nicht dargestellt) verbunden werden.

Der festen Anschlussstelle 2 schließt sich ein gerader Kettenabschnitt an, der Untertrum genannt wird und mit 4a bezeichnet wird. Der Untertrum 4a geht über einen Umlenkbereich 5a der Energieführungskette 1 in einen Obertrum 6a über, der zumindest teilweise (hier nicht dargestellt) auf dem Untertrum 4a beziehungsweise auf Gleitschienen einer Führungsrinne gleitend gelagert ist. Der Obertrum 6a ist mit der beweglichen Anschlussstelle 3 verbunden.

Die Energieführungskette umfasst eine Vielzahl von Kettengliedern, von denen einige Kettenglieder 7a bis 7e dargestellt sind. Die Kettenglieder 7a und 7e sind als Kettenendglieder ausgebildet, während die Kettenglieder 7b bis 7d sich an verschiedenen Stellen der Energieführungskette 1 befinden.

Bewegt sich die bewegliche Anschlussstelle 3 in die Richtung des Pfeils 8a, werden zumindest die Kettenglieder 7e und 7d, also Kettenglieder im Obertrum 6a, in Längsrichtung der Energieführungskette auf Zug beansprucht, da die Führung des Obertrums 6a nicht reibungsfrei ist. Auch werden im Umlenkbereich 5a Kettenglieder bei der Bewegung der beweglichen Anschlussstelle gegeneinander verschwenkt, was ebenfalls reibungsbehaftet ist und die Zugspannung im Obertrum erhöhen dürfte. Da je nach Position der beweglichen Anschlussstelle 3 die Länge des Obertrums 6a unterschiedlich ist und damit auch die Anzahl der Kettenglieder, die reibungsbehaftet entlang des Untertrums 4a oder einer Führungsschiene gleiten, stellen sich bei der Bewegung der beweglichen Anschlussstelle 3 unterschiedlich große Kräfte in den einzelnen Kettengliedern ein. Eine auf ein Kettengliedwirkende Kraft kann jeweils durch eine Messeinrichtung 9b bis 9e gemessen werden.

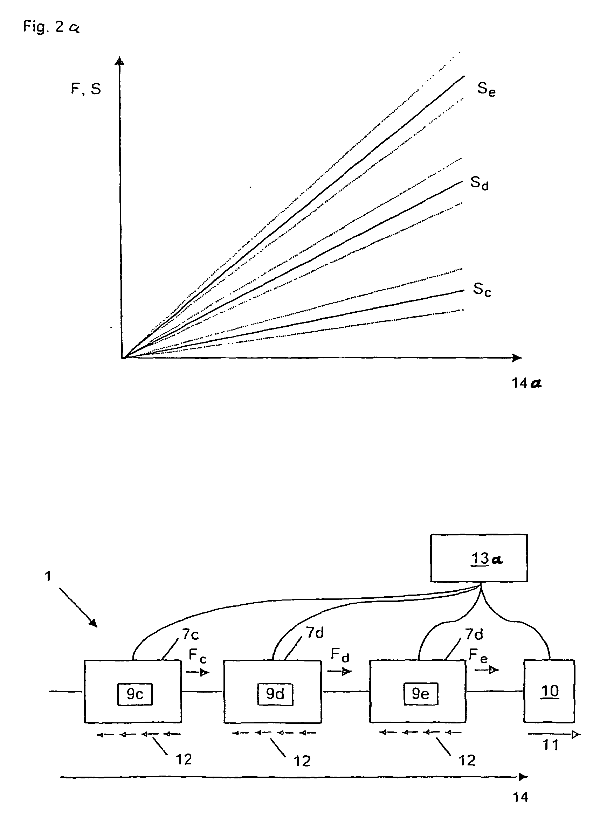

Figur 2a zeigt ein vereinfachtes mechanisches Modell für die Energieführungskette 1 mit den einzelnen Kettengliedern 7c, 7d, 7e. An Kettenglied 7e ist ein beweglicher Verbraucher 10a angeschlossen, der durch die in der Energieführungskette 1 geführten Kabel, Schläuche oder dergleichen (nicht dargestellt) versorgt wird. An das Kettenglied 7c schließen sich weitere, nicht dargestellte Kettenglieder an, wie beispielsweise die Kettenglieder 7a und 7b an, die aber der Einfachheit halber in Figur 2a nicht dargestellt werden. Bewegt sich der beweglicher Verbraucher 10a in die Bewegungsrichtung entsprechend des unter dem Verbraucher 10a dargestellten Pfeil 11a, werden die einzelnen Kettenglieder, wie oben bereits ausgeführt, aufgrund der der Bewegung entgegengesetzten Reibkräfte 12a auf Zug beansprucht.

Die Messeinrichtung 9c, 9d, 9e messen die jeweils auf die entsprechenden Kettenglieder wirkende Kraft F_{c}, F_{d} und Fₑ in Längsrichtung der Energieführungskette 1. Die Messwerte F_{c}, F_{d} und Fₑ werden einer Auswerteeinheit 13a zugeführt, die die Messwerte mit zuvor bestimmten Sollwerten S_{c}, S_{d} und Sₑ vergleicht. Des weiteren wird der Auswerteeinheit 13 ein Wert bezüglich des Verfahrweges 14a des Verbrauchers 9 zugeführt.

Die Sollwerte sind in dem Diagramm der Figur 1a über dem Verfahrweg 14a des beweglichen Verbrauchers 10a aufgetragen. Mit größer werdendem Verfahrweg 14a steigen die Sollwerte S_{c}, S_{d} und Sₑ an, da in diesem Beispiel mit dem Verfahrweg 14a die Anzahl der Kettenglieder der Energieführungskette 1 wächst, deren Bewegung in beispielsweise einer Führungsrinne Reibung erzeugt.

Unter der Annahme, dass beispielsweise das Kettenglied 7e aufgrund eines erhöhten Verschleißes eine sehr starke Reibung verursacht, wird der gemessene Kraftwert Fₑ außerhalb des Toleranzbereiches des Sollwerts Sₑ liegen, während die Messwerte F_{c} und F_{d} innerhalb des vorbestimmten Toleranzbereiches liegen. Aufgrund der unzulässigen Abweichung von Fₑ kommt es zu beispielsweise einer Abschaltung der Bewegung der Energieführungskette. Da die Kräfte F_{c} und F_{d} nicht unzulässig von ihren Sollwerten abgewichen sind, kann die Abschaltung nur durch Kettenglied 7e verursacht sein. Das erfindungsgemäße Überwachungssystem ermöglicht anhand der an unterschiedlichen Stellen der Energieführungskette 1 gemessenen Werte damit eine schnellere Lokalisierung eines schadhaften oder verschleißten Kettenglieds.

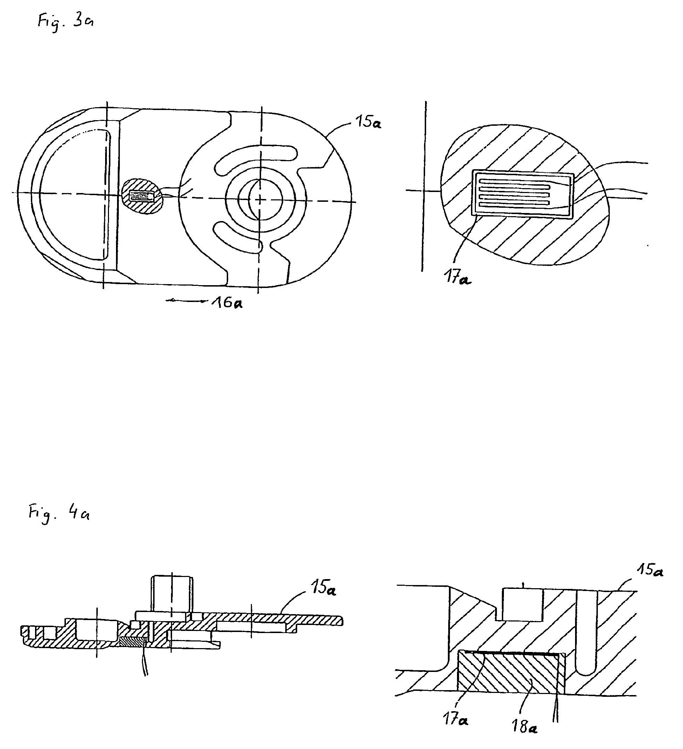

Figur 3a zeigt eine Seitenlasche 15a eines Kettenglieds einer Energieführungskette. Die Seitenlasche 15a bildet mit einer zweiten, parallel ausgerichteten Seitenlasche (nicht darstellt)und mit wenigstens einem Quersteg (nicht dargestellt), der den Abstand der beiden Seitenlaschen zueinander bestimmt, im wesentlichen das Kettenglied. In Längserstreckung 16a der Seitenlasche 15a würden sich im Verbund einer Energieführungskette dann die Seitenlaschen benachbarter Kettenglieder anschließen.

Die Seitenlasche 15a umfasst einen Dehnungsmessstreifen 17a, der in Richtung der Längserstreckung 16a der Seitenlasche 15a ausgerichtet ist. Mit dem Dehnungsmessstreifen 17a lassen sich somit die Kräfte in Längsrichtung der Energieführungskette 1 bestimmen. Wie der Figur 4a, die die Seitenlasche 15a im Schnitt in der Draufsicht zeigt und eine Vergrößerung eines Teils der Seitenlasche 15a beinhaltet, zu entnehmen ist, ist der Dehnungsmessstreifen 17a in einer Aussparung 18a der Seitenlasche 15a angeordnet. Die Aussparung 18a ist durch eine Abdeckung 19a ausgefüllt, die durch Ausspritzen der Aussparung mit Kunststoff, Harz oder dergleichen entstehen kann.

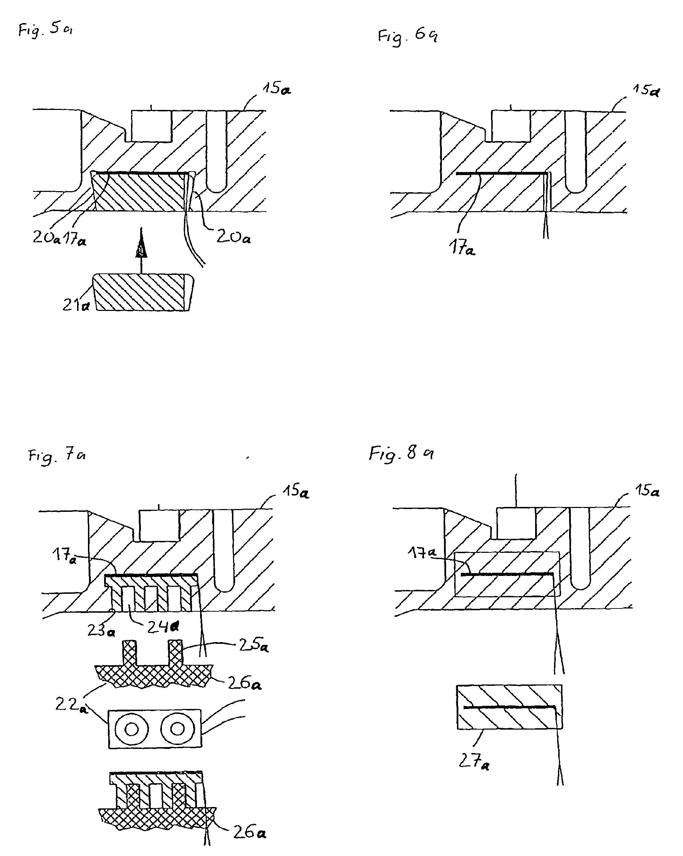

Entsprechend Figur 5a kann die Aussparung 18a Hinterschneidungen 20a aufweisen, so dass ein entsprechend ausgebildeter Befestigungsclip 21a als Abdeckung oder Schutz des Dehnungsmessstreifens 17a fungieren kann.

Eine andere Möglichkeit, den Dehnungsmessstreifen 17a sicher und geschützt in der Seitenlasche 15a anzuordnen, zeigt Figur 6a. Der Dehnungsmessstreifen 17a ist komplett von dem Material der Seitenlasche 15a umspritzt.

Um den Dehnungsmessstreifen 17a in der Gussform für die Seitenlasche zu fixieren, umfasst gemäß des Ausführungsbeispiels der Figur 7a der Dehnungsmessstreifen einen Einsatz 22a mit zwei beabstandeten Vorsprüngen 23a, die jeweils eine Bohrung 24a umfassen. In diese Bohrungen 24a kann jeweils ein Steg 25a eines Haltewerkzeugs gesteckt werden, so dass der Dehnungsmessstreifen beim Gießen in Position gehalten wird Nach Beendigung des Gießvorgangs können die Stege 25a des Haltewerkzeugs wieder aus dem Einsatz 22a herausgezogen werden.

Figur 8a zeigt einen Dehnungsmessstreifen 17a mit einem Schmelzeinsatz 27a. Beim Gießen der Seitenlasche 15a verbindet sich das Material des Schmelzeinsatzes 27a mit dem Gussmaterial für die Seitenlasche bzw. bildet mit dem Gussmaterial einen feste Verbund.

Figur 1b zeigt eine Energieführungskette 1, die eine feste Anschlussstelle 2 und eine bewegliche Anschlussstelle 3 aufweist. An der beweglichen Anschlussstelle 3 ist die Energieführungskette 1 mit einer Anschlusseinrichtung 4b verbunden, an die sich ein Verbraucher anschließen lässt. An die feste Anschlussstelle 2 schließt sich ein gerader Kettenabschnitt an, der Untertrum genannt wird und mit 5b bezeichnet wird. Der Untertrum 5b geht über einen Umlenkbereich 6b der Energieführungskette 1 in ein Obertrum 7b über, der zumindest teilweise auf dem Untertrum 5b bzw. auf Gleitschienen einer nicht dargestellten Führungsrinne gleitend gelagert ist. Der Obertrum 7b ist mit der beweglichen Anschlussstelle 3 der Anschlusseinrichtung 4b verbunden.

Die Anschlusseinrichtung 4b umfasst ein in der Fig. 1b nicht dargestellten Kraftaufnehmer 8b (siehe Fig. 2b oder Fig. 3b). Dieser Kraftaufnehmer 8b misst eine Kraft, die in Längsrichtung der Energieführungskette 1 an dem an der Anschlusseinrichtung 4b angeschlossenen Ende der Energieführungskette 1 wirkt. Der Kraftaufnehmer 8b leitet ein dem gemessenen Kraftwert entsprechendes Signal an die Auswerteeinheit 9b, die in diesem Ausführungsbeispiel als Rechner ausgebildet ist. Die Auswerteeinheit 9b umfasst einen Speicher zur Abspeicherung eines Sollwerts 10b. Dieser Sollwert 10b kann in Abhängigkeit eines Verfahrweges 11b der Anschlusseinrichtung 4b unterschiedliche Werte annehmen. Das in der Fig. 1 gezeigte Diagramm zeigt eine lineare Abhängigkeit zwischen dem Sollwert 10b und dem Verfahrweg 11b. Es sei an dieser Stelle betont, dass die Abhängigkeit zwischen Sollwert 10b und Verfahrweg 11b beliebig gewählt werden kann.

Der Auswerteeinheit 9b wird auch eine Information zugeführt, durch die die Position der Anschlusseinrichtung 4b ermittelt oder berechnet werden kann. Dadurch ist ein Vergleich des Sollwerts 10b mit der gemessenen Kraft im Kraftaufnehmer 8b in Abhängigkeit der Position der Anschlusseinrichtung 4b möglich.

Aus dem Diagramm der Fig. 1b lässt sich des weiteren entnehmen, dass der Sollwert 10b nicht nur von dem Verfahrweg 11b oder der Position der Anschlusseinrichtung 4b abhängt, sondern auch von der Bewegungsrichtung des Verbrauchers 4b. Während die im Diagramm oben verlaufene Gerade den Sollwert in Bewegungsrichtung 12b darstellt, stellt die untere Gerade den Sollwert für die Bewegungsrichtung 13b dar.

Das Diagramm der Fig. 1b zeigt einen Toleranzbereich 14b für den jeweiligen Sollwert 10b. In dem hier ausgeführten Ausführungsbeispiel liegt der Sollwert 10b jeweils in der Mitte des Toleranzbereiches 14b, wobei der Toleranzbereich 14b jeweils eine konstante Breite aufweist. Sowohl die Lage des Toleranzbereiches 14b im Bezug zum Sollwert als auch die Breite des Toleranzbereiches 14b kann von dem Verfahrweg 11b bzw. von der Position der beweglichen Anschlussstelle 3b und/oder von der Bewegungsrichtung 12b, 13b abhängen.

Liegt beispielsweise bei einer Bewegung der Anschlusseinrichtung 4b in Richtung 13b der gemessene Kraftwert außerhalb des Toleranzbereiches 14b der obigen Gerade im Diagramm, erzeugt die Auswerteeinheit 9b ein Signal. Dieses Signal kann den Betriebszustand der Energieführungskette ändern, beispielsweise dadurch, dass die Bewegung der Anschlusseinrichtung 4b verlangsamt oder gestoppt wird.

Ferner kann eine Speichereinrichtung (nicht gezeigt) mit einer Wiedergabeeinrichtung vorgesehen sein, mittels derer die gemessenen Werte, gegebenenfalls mit den Sollwerten und den Toleranzwerten, über eine Zeitdauer des Betriebs der Kette gespeichert und gegebenenfalls bearbeitet, und wiedergegeben werden können.

Fig. 2b zeigt ein Ausführungsbeispiel für eine Anschlusseinrichtung 4b zur Verbindung einer Energieführungskette 1 mit einem beweglichen Verbraucher. Der bewegliche Verbraucher wird an einem Flansch 15b an der Anschlusseinrichtung 4b befestigt. Die Anschlusseinrichtung 4b weist ein Verbindungsstück 16b auf, das durch eine Schraubverbindung 17b mit einem ersten Ende 18b des Kraftaufnehmers 8b verbunden ist. Ein zweites Ende 19b des Kraftaufnehmers 8b ist über eine Schraubverbindung 20b an einem zweiten Verbindungsstück 21b befestigt. Da die Verbindungsstücke 16b, 21b über eine Linearführung gleitend miteinander verbunden sind und die Schraubverbindungen 17b, 20b durch Langlöcher greifen, ergibt sich ein Kraftfluss von dem zweiten Verbindungsstück 21b über den Kraftaufnehmer 8b zu dem ersten Verbindungsstück 16b.

Das erste Verbindungsstück 16b weist einen Befestigungsbereich 23b auf, an dem ein Endbefestigungsteil der Energieführungskette 1 befestigt werden kann. Dem Befestigungsbereich 23b schließt sich ein Unterstützungsbereich 24b an, das wenigstens ein Kettenglied der Energieführungskette trägt, das sich an das Endbefestigungsteil der Energieführungskette anschließt. Somit ermöglicht die Anschlusseinrichtung der Fig. 2b, dass der Kraftaufnehmer 8b die an dem Endbefestigungsteil der Energieführungskette 1 angreifende Kraft misst.

Rollen 25b ermöglichen eine in Bahnen geführte Bewegung der Anschlusseinrichtung 4b Des weiteren umfasst die Anschlusseinrichtung 4b Zugentlastungen 26b, durch die eine Zugspannung den Kabeln, Schläuchen oder dergleichen verhindert werden soll, die durch die Energieführungskette geführt werden.

Fig. 3b zeigt eine weitere Anschlusseinrichtung 27b. Im Gegensatz zu der Anschlusseinrichtung 15b der Fig. 2b sind das erste Verbindungsstück 17b und das zweite Verbindungsstück 22b nicht über eine Linearführung miteinander verbunden, sondern durch eine Hebelanordnung 28b verbunden, die eine begrenzte Relativbewegung bzw. ein seitliches Verschieben von erstem Verbindungsstück 17b und zweitem Verbindungsstück 22b zulässt. Auch bei dieser Anschlusseinrichtung 27b erfolgt der Kraftfluss entlang des ersten Verbindungsstücks 17b über den Kraftaufnehmer 8b zu dem zweiten Verbindungsstück 22b.

### Bezugszeichenliste

- 1: Energieführungskette
- 2: Feste Anschlussstelle
- 3: Bewegliche Anschlussstelle
- 4a: Untertrum
- 5a: Umlenkbereich
- 6a: Obertrum
- 7a bis 7e: Kettenglied
- 8a: Pfeil
- 9a bis 9e: Messeinrichtung
- 10a: Beweglicher Verbraucher
- 11a: Pfeil
- 12a: Reibkraft
- 13a: Auswerteeinheit
- 14a: Verfahrweg
- 15a: Seitenlasche
- 16a: Längserstreckung
- 17a: Dehnungsmessstreifen
- 18a: Aussparung
- 19a: Abdeckung
- 20a: Hinterschneidung
- 21a: Befestigungsclip
- 22a: Einsatz
- 23a: Vorsprung
- 24a: Bohrung
- 25a: Steg
- 26a: Haltewerkzeug
- 27a: Schmelzeinsatz

- 4b: Anschlusseinrichtung
- 5b: Untertrum
- 6b: Umlenkbereich
- 7b: Obertrum
- 8b: Kraftaufnehmer
- 9b: Auswerteeinheit
- 10b: Sollwert
- 11b: Verfahrweg
- 12b: Bewegungsrichtung
- 13b: Bewegungsrichtung
- 14b: Toleranzbereich
- 15b: Flansch
- 16b: erstes Verbindungsstück
- 17b: Schraubverbindung
- 18b: erstes Ende
- 19b: zweites Ende
- 20b: Schraubverbindung
- 21b: zweites Verbindungsstück
- 22b: Langloch
- 23b: Befestigungsbereich
- 24b: Unterstützungsbereich
- 25b: Rollen
- 26b: Zugentlastung
- 27b: Anschlusseinrichtung
- 28b: Hebelanordnung

## Patentansprüche

1. Energieführungskette (1) mit mehreren gelenkig miteinander verbundenen Kettengliedern (7a, 7b, 7c, 7d, 7e) zur Führung von Schläuchen, Kabeln oder dergleichen zwischen zwei relativ zueinander beweglichen Anschlussstellen (2, 3), **dadurch gekennzeichnet , dass** wenigstens zwei Kettenglieder jeweils eine Messeinrichtung (9a, 9b, 9c, 9d, 9e) umfassen, die eine auf das jeweilige Kettenglied wirkende Kraft und/oder eine andere physikalische Größe an dem Kettenglied misst, dass eine Auswerteeinheit (13) vorgesehen ist, die Messwerte der Messeinrichtungen (9b, 9c, 9d, 9e) einliest, dass der Auswerteeinheit (13) ein Wert zuführbar ist, durch den die Position der beweglichen Anschlussstelle (3) der Energieführungskette (1) bestimmt bzw. berechenbar ist, dass die Auswerteeinheit (13) wenigstens einen Messwert einer Messeinrichtung mit einem jeweiligen Sollwert vergleicht und ein Signal erzeugt, wenn der Messwert außerhalb eines Toleranzbereiches des jeweiligen Sollwerts liegt, wobei die jeweiligen Sollwerte und/oder die jeweiligen Toleranzbereiche von der Position wenigstens einer beweglichen Anschlussstelle (3) abhängen.

2. Energieführungskette nach Anspruch 1, **dadurch gekennzeichnet , dass** die jeweiligen Sollwerte und/oder die jeweiligen Toleranzbereiche von wenigstens einer Bewegungsrichtung wenigstens einer beweglichen Anschlussstelle (3) abhängen.

3. Energieführungskette nach Anspruch 1 oder 2, **dadurch gekennzeichnet, dass** die Auswerteeinheit (13) einen Speicher umfasst, in dem die Messwerte speicherbar sind.

4. Energieführungskette nach Anspruch 3, **dadurch gekennzeichnet, dass** die Messwerte als Grundlage für die Festlegung der jeweiligen Sollwerte und/oder Toleranzbereiche dienen.

5. Energieführungskette nach Anspruch 3 oder 4, **dadurch gekennzeichnet, dass** der Messwert der ersten Messeinrichtung als Grundlage für die Festlegung des Sollwerts und/oder Toleranzbereiches des Messwerts der zweiten Messeinrichtung dient.

6. Energieführungskette nach einem der Ansprüche 1 bis 5, **dadurch gekennzeichnet, dass** das Signal zu einer Einrichtung übertragbar ist, mittels der aufgrund des ursprünglichen oder gegebenenfalls verarbeiteten Signals der Betriebszustand der Energieführungskette (1) veränderbar ist.

7. Energieführungskette nach einem der Ansprüche 1 bis 6, **dadurch gekennzeichnet, dass** das Signal zu einer Einrichtung übertragen wird, mittels der aufgrund des ursprünglichen oder gegebenenfalls verarbeiteten Signals eine Relativbewegung der Anschlussstellen (2, 3) gestoppt werden kann.

8. Energieführungskette nach einem der Ansprüche 1 bis 7, **dadurch gekennzeichnet, dass** die Messeinrichtung (9a, 9b, 9c, 9d, 9e) einen Dehnungsmessstreifen (17) umfasst.

9. Energieführungskette nach einem der Ansprüche 1 bis 8, **dadurch gekennzeichnet, dass** die Messeinrichtung (9a, 9b, 9c, 9d, 9e) in einem Bauteil des Kettenglieds eingegossen ist.

10. Energieführungskette nach einem der Ansprüche 1 bis 8, **dadurch gekennzeichnet, dass** die Messeinrichtung (9a, 9b, 9c, 9d, 9e) in einer Aussparung (18) in einem Bauteil des Kettenglieds angeordnet ist.

11. Energieführungskette nach einem der Ansprüche 1 bis 10, wobei die eine Messeinrichtung ein Kraftaufnehmer ist und in der Anschlussstelle der Energieführungskette angeordnet ist.

12. Überwachungssystem für den Betrieb wenigstens einer Energieführungskette (1), die mehrere miteinander gelenkig verbundene Kettenglieder (7a, 7b, 7c, 7d, 7e) umfasst und zwischen zwei relativ zueinander beweglichen Anschlussstellen (2, 3) Schläuche, Kabel oder dergleichen führt, mit einer ersten Messeinrichtung, zur Messung einer auf ein Kettenglied wirkenden Kraft und/oder einer anderen physikalischen Größe an einem ersten Kettenglied, und mit wenigstens einer zweiten Messeinrichtung, zur Messung einer auf ein anderes Kettenglied wirkenden Kraft und/oder einer anderen physikalischen Größe an diesem anderen Kettenglied, und mit einer Auswerteeinheit (13), die Messwerte der Messeinrichtungen (9b, 9c, 9d, 9e) einliest, wobei der Auswerteeinheit (13) ein Wert zuführbar ist, durch den die Position der beweglichen Anschlussstelle (3) der Energieführungskette bestimmt bzw. berechenbar ist, die Auswerteeinheit wenigstens einen Messwert einer Messeinrichtung mit einem jeweiligen Sollwert vergleicht, wobei im Gebrauch die jeweiligen Sollwerte und/oder die jeweiligen Toleranzbereiche von der Position wenigstens einer beweglichen Anschlussstelle (3) abhängen, und ein Signal erzeugt, wenn der Messwert außerhalb eines Toleranzbereiches des jeweiligen Sollwerts liegt.

13. System nach Anspruch 12, **dadurch gekennzeichnet, dass** die jeweiligen Sollwerte und/oder die jeweiligen Toleranzbereiche von wenigstens einer Bewegungsrichtung wenigstens einer beweglichen Anschlussstelle (3) abhängen.

14. System nach Anspruch 12 oder 13, **dadurch gekennzeichnet, dass** das Signal zu einer Einrichtung übertragen wird, mittels der aufgrund des ursprünglichen oder gegebenenfalls verarbeiteten Signals der Betriebszustand der Energieführungskette (1) veränderbar ist.

15. System nach einem der Ansprüche 12 bis 14, **dadurch gekennzeichnet , dass** das Signal zu einer Einrichtung übertragen wird, mittels der aufgrund des ursprünglichen oder gegebenenfalls verarbeiteten Signals eine Relativbewegung der Anschlussstellen (2, 3) gestoppt werden kann.

16. System nach einem der Ansprüche 12 bis 15, **dadurch gekennzeichnet , dass** die Auswerteeinheit (13) einen Speicher umfasst, der die Messwerte speichert.

17. System nach einem der Ansprüche 12 bis 16, **dadurch gekennzeichnet, dass** die Messwerte als Grundlage für die Festlegung der jeweiligen Sollwerte und/oder Toleranzbereiche dienen.

18. System nach einem der Ansprüche 12 bis 17, **dadurch gekennzeichnet , dass** der Messwert der ersten Messeinrichtung als Grundlage für die Festlegung des Sollwerts und/oder Toleranzbereiches des Messwerts der zweiten Messeinrichtung dient.

## Claims

1. Energy guiding chain (1), with several chain links (7a, 7b, 7c, 7d, 7e) joined together in pivoting fashion, for guiding hoses, cables and the like between two connecting points (2, 3) capable of motion relative to each other, **characterised in that** at least two chain links each encompass a measuring device (9a, 9b, 9c, 9d, 9e) that measures a force acting on the respective chain link and/or another physical parameter on the chain link, that an analyser unit (13) is provided that reads in the measured values of the measuring devices (9b, 9c, 9d, 9e), that the analyser unit (13) can be supplied with a value that can be used to determine or calculate the position of the mobile connecting point (3), that the analyser unit (13) compares at least one measured value of a measuring device with the respective target value and generates a signal if the measured value is outside a tolerance range of the respective target value, the respective target values and/or the respective tolerance ranges being dependent on the position of at least one mobile connecting point (3).

2. Energy guiding chain according to Claim 1, **characterised in that** the respective target values and/or the respective tolerance ranges are dependent on the direction of motion of at least one mobile connecting point (3).

3. Energy guiding chain according to Claim 1 or 2, **characterised in that** the analyser unit (13) displays a memory that stores the measured values.

4. Energy guiding chain according to Claim 3, **characterised in that** the measured values are used as the basis for defining the respective target values and/or tolerance ranges.

5. Energy guiding chain according to Claim 3 or 4, **characterised in that** the measured value of the first measuring device is used as the basis for defining the target value and/or the tolerance range of the measured value of the second measuring device.

6. Energy guiding chain according to one of Claims 1 to 5, **characterised in that** the signal can be transmitted to a device with which, based on the original or, where appropriate, processed signal, the operating status of the energy guiding chain (1) can be changed.

7. Energy guiding chain according to one of Claims 1 to 6, **characterised in that** the signal is transmitted to a device with which, based on the original or, where appropriate, processed signal, a relative motion of the connecting points (2, 3) can be stopped.

8. Energy guiding chain according to one of Claims 1 to 7, **characterised in that** the measuring device ((9a, 9b, 9c, 9d, 9e) encompasses a strain gauge (17).

9. Energy guiding chain according to one of Claims 1 to 8, **characterised in that** the measuring device (9a, 9b, 9c, 9d, 9e) is moulded into a component of the chain link.

10. Energy guiding chain according to one of Claims 1 to 8, **characterised in that** the measuring device (9a, 9b, 9c, 9d, 9e) is located in a recess (18) in the component of the chain link.

11. Energy guiding chain according to one of Claims 1 to 10, **characterised in that** the measuring device is a force transducer and is located in the connecting point of the energy guiding chain.

12. Monitoring system for the operation of at least one energy guiding chain (1) that comprises several chain links (7a, 7b, 7c, 7d, 7e) joined together in pivoting fashion and guides hoses, cables or the like between two connecting points (2, 3) capable of motion relative to each other, with a first measuring device, which measures a force acting on a chain link and/or another physical parameter on a first chain link, and at least a second measuring device, which measures a force acting on another chain link and/or another physical parameter on this other chain link, and an analyser unit (13) that reads in the measured values of the measuring devices (9b, 9c, 9d, 9e), wherein the analyser unit (13) can be supplied with a value that can be used to determine or calculate the position of the mobile connecting point (3) of the energy guiding chain, the analyser unit compares at least one measured value of a measuring device with the respective target value, during utilization the respective target values and/or respective tolerance ranges depending on the position of at least one mobile connecting point (3), and generates a signal if the measured value is outside a tolerance range of the respective target value.

13. System according to Claim 12, **characterised in that** the respective target values and/or the respective tolerance ranges are dependent on at least one direction of motion of at least one mobile connecting point (3).

14. System according to Claim 12 or 13, **characterised in that** the signal is transmitted to a device with which, based on the original or, where appropriate, processed signal, the operating status of the energy guiding chain (1) can be changed.

15. System according to one of the Claims 12 to 14, **characterised in that** the signal is transmitted to a device with which, based on the original or, where appropriate, processed signal, a relative motion of the connecting points (2, 3) can be stopped.

16. System according to one of the Claims 12 to 15, **characterised in that** the analyser unit (13) displays a memory that stores the measured values.

17. System according to one of the Claims 12 to 16, **characterised in that** the measured values are used as the basis for defining the respective target values and/or tolerance ranges.

18. System according to one of the Claims 12 to 17, **characterised in that** the measured value of the first measuring device is used as the basis for defining the target value and/or the tolerance range of the measured value of the second measuring device.

## Revendications

1. Chaîne de guidage d'énergie (1) avec plusieurs maillons de chaîne (7a, 7b, 7c, 7d, 7e) relés de manière articulée l'un à l'autre pour le guidage de tuyaux flexibles, câbles ou équivalent entre deux points de raccord (2, 3), mobiles l'un par rapport à l'autre, **caractérisée en ce qu'**au moins deux maillons de chaîne comprennent respectivement un dispositif de mesure (9a, 9b, 9c, 9d, 9e) qui mesure une force qui agit sur le maillon de chaîne respectif et/ou une autre grandeur physique sur le maillon de chaîne, qu'une unité d'évaluation (13) est prévue qui lit des valeurs de mesure des dispositifs de mesure ((9a, 9b, 9c, 9d, 9e), qu'une valeur peut être amenée à l'unité d'évaluation (13) par laquelle la position du point de raccord mobile (3) de la chaîne de guidage d'énergie (1) est déterminée ou peut être calculée, que l'unité d'évaluation (13) compare au moins une valeur de mesure d'un dispositif de mesure avec une valeur de consigne respective et produit un signal lorsque la valeur de mesure se situe en dehors de la plage de tolérance de la valeur de consigne respective, les valeurs de consigne respectives et/ou les plages de tolérance respectives dépendant de la position d'au moins un point de raccord mobile (3).

2. Chaîne de guidage d'énergie selon la revendication 1, **caractérisée en ce que** les valeurs de consigne respectives et/ou les plages de tolérance respectives dépendent d'au moins un sens de déplacement d'au moins un point de raccord mobile (3).

3. Chaîne de guidage d'énergie selon la revendication 1 ou 2, **caractérisée en ce que** l'unité d'évaluation (13) comprend une mémoire dans laquelle les valeurs de mesure peuvent être mémorisées.

4. Chaîne de guidage d'énergie selon la revendication 3, **caractérisée en ce que** les valeurs de mesure servent de base pour fixer les valeurs de consigne et/ou les plages de tolérance respectives.

5. Chaîne de guidage d'énergie selon la revendication 3 ou 4, **caractérisée en ce que** la valeur de mesure du premier dispositif de mesure sert de base pour fixer la valeur de consigne et/ou la plage de tolérance de la valeur de mesure du second dispositif de mesure.

6. Chaîne de guidage d'énergie selon l'une des revendications 1 à 5, **caractérisée en ce que** le signal peut être transmis à un dispositif au moyen duquel l'état de fonctionnement de la chaîne de guidage d'énergie (1) est variable en raison du signal original ou éventuellement traité.

7. Chaîne de guidage d'énergie selon l'une des revendications 1 à 6, **caractérisée en ce que** le signal est transmis à un dispositif au moyen duquel un mouvement relatif des points de raccord (2, 3) peut être stoppé en raison du signal original ou éventuellement traité.

8. Chaîne de guidage d'énergie selon l'une des revendications 1 à 7, **caractérisée en ce que** le dispositif de mesure (9a, 9b, 9c, 9d, 9e) comprend une bande de mesure d'élongation (17).

9. Chaîne de guidage d'énergie selon l'une des revendications 1 à 8, **caractérisée en ce que** le dispositif de mesure (9a, 9b, 9c, 9d, 9e) est moulé dans un composant du maillon de chaîne.

10. Chaîne de guidage d'énergie selon l'une des revendications 1 à 8, **caractérisée en ce que** le dispositif de mesure (9a, 9b, 9c, 9d, 9e) est placé dans un évidement (18) dans un composant du maillon de chaîne.

11. Chaîne de guidage d'énergie selon l'une des revendications 1 à 10, l'un des dispositifs de mesure étant un récepteur de force et étant placé dans le point de raccord de la chaîne de guidage d'énergie.

12. Système de surveillance pour le fonctionnement d'au moins une chaîne de guidage (1) qui comprend plusieurs maillons de chaîne (7a, 7b, 7c, 7d, 7e) reliés de manière articulée l'un à l'autre et guide des tuyaux flexibles, des câbles ou équivalent entre deux points de raccord (2, 3) mobiles l'un par rapport à l'autre, avec un premier dispositif de mesure pour mesurer une force qui agit sur un maillon de la chaîne et/ou une autre grandeur physique sur un premier maillon de chaîne et avec au moins un deuxième dispositif de mesure pour mesurer une force qui agit sur un autre maillon de chaîne et/ou une autre grandeur physique sur cet autre maillon de chaîne, et avec une unité d'évaluation (13) qui lit des valeurs de mesure des dispositifs de mesure ((9a, 9b, 9c, 9d, 9e), une valeur pouvant être amenée à l'unité d'évaluation (13) par laquelle la position du point de raccord mobile (3) de la chaîne de guidage d'énergie (1) est déterminée ou peut être calculée, l'unité d'évaluation (13) comparant au moins une valeur de mesure d'un dispositif de mesure avec une valeur de consigne respective, cependant qu'en utilisation les valeurs de consigne respectives et/ou les plages de tolérance respectives dépendant de la position d'au moins un point de raccord mobile (3) et produisant un signal lorsque la valeur de mesure se situe en dehors d'une plage de tolérance de la valeur de consigne respective.

13. Système selon la revendication 12, **caractérisé en ce que** les valeurs de consigne respectives et/ou les plages de tolérance respectives dépendent d'au moins un sens de déplacement d'au moins un point de raccord mobile (3).

14. Système selon la revendication 12 ou 13, **caractérisé en ce que** le signal est transmis à un dispositif au moyen duquel l'état de fonctionnement de la chaîne de guidage d'énergie (1) est variable en raison du signal original ou éventuellement traité.

15. Système selon l'une des revendications 12 à 14, **caractérisé en ce que** le signal est transmis à un dispositif au moyen duquel un mouvement relatif des points de raccord (2, 3) peut être stoppé en raison du signal original ou éventuellement traité.

16. Système selon l'une des revendications 12 à 15, **caractérisé en ce que** l'unité d'évaluation (13) comprend une mémoire qui mémorise les valeurs de mesure.

17. Système selon l'une des revendications 12 à 16, **caractérisé en ce que** les valeurs de mesure servent de base pour fixer les valeurs de consigne et/ou les plages de tolérance respectives.

18. Système selon l'une des revendications 12 à 17, **caractérisé en ce que** la valeur de mesure du premier dispositif de mesure sert de base pour fixer les valeurs de consigne et/ou les plages de tolérance respectives du second dispositif de mesure
